# EUROPEAN PATENT APPLICATION

(11) **EP 3 742 247 A1**
(43) Date of publication of application: **25.11.2020**
(21) Application number: 20174218.6
(22) Date of filing: 12.05.2020
(51) Int. Cl.: G05B 23/02, G05B 19/406

(54) **SYSTEM AND METHOD FOR MANAGING THE MAINTENANCE OF MACHINING CENTERS, MACHINES AND THE LIKE**

(30) Priority: 23.05.2019 IT 201900007169
(71) Applicant: SCM Group S.p.A., 47921 Rimini (RN) (IT)
(72) Inventor: CAIFFA, Luigi, 47921 RIMINI (RN) (IT); BELLATRECCIA, Dario, 47921 RIMINI (RN) (IT); INGALDI, Carmine, 47921 RIMINI (RN) (IT)
(74) Representative: Tiburzi, Andrea

(57) **Abstract**

The present invention relates to a system for maintenance managing (1) comprising a central remote control unit (3), at least one database (31), connected to said central remote control unit (3), in which files and multimedia contents, containing maintenance procedures, are stored, at least one machine (2) comprising one manufacturing unit (21) for manufacturing pieces of wood, plastic, aluminum and the like, to maintain, a diagnostic unit (22), having one or more sensors and/or detectors arranged on said manufacturing unit (21), to detect the operating status of said manufacturing unit (21) based on one or more functional parameters, and a processing module (23) operatively connected to said diagnostic unit (22), configured to detect and process the data related to said parameters detected by said sensors and/or detectors, wherein said processing module (23) comprises transceiving means, for the connection to said central remote control unit (3) for the transmission of said data relevant to said parameters detected by said sensors and/or detectors, and one or more computer (41, 42, 43), that can be associated to said machine (2), equipped with display means, such as a display.

The present invention also relates to a control method (6) for controlling a maintenance management system (1), a computer program and a storage medium.

## Description

The present invention relates to a system and method for managing the maintenance of machining centers, machines and the like.

More specifically, the invention relates to a system and method of the mentioned type, studied and implemented in particular to allow autonomous maintenance of work centers, processing machines, plants and the like, and, at the same time, to optimally plan any ordinary and/or extraordinary maintenance interventions, but which can be used for any system or plant whose maintenance needs to be planned and optimized.

In the following, the description will be directed to the maintenance of woodworking machines or work centers, but it is clear that the same should not be considered limited to this specific use.

As is well known, the maintenance systems of small or large plants are increasingly managed through Web systems, and connected to suitable control centers.

In particular, these services use modern technologies of the Internet of things (or also Internet Of Things - IOT), so as to obtain and use real time updated information about the operating status of the monitored machine or plant, and to allow if necessary, a timely maintenance.

In this way, moreover, it is also possible to plan any ordinary maintenance interventions well in advance, as better explained below.

It is known, in fact, that the main objective of the scheduled maintenance systems is providing an advanced tool for the organization's maintenance team for managing/planning maintenance interventions with the aim in general of:
- reducing machine downtime, which as is known has a high cost;
- improving production performance;
- standardizing the quality of the final product;
- establishing a more direct channel between vendor/dealer and end customer, for the use of the after-sales services.

The maintenance required in a work center can be divided into ordinary, extraordinary and scheduled.

As regards ordinary maintenance, each produced machine, generally, during the configuration phase, receives a list of ordinary maintenance operations, which correspond with the traditional maintenance activities described in the use and maintenance catalog.

Currently these activities have been digitized, so that the machine can independently know, through appropriate sensors and/or detectors, its own maintenance operations, so that it can communicate them externally.

Therefore, the ordinary maintenance concerns periodic operations to be carried out on the machine or on the work center, mainly due to the natural wear of the components.

Ordinary maintenance can be linked, or determined, by time-related factors (due to time, the parts of a machine generally wear out) or to other variables (number of cycles, number of machined pieces...). The intervention thresholds of these variables are generally established by the manufacturer.

The main feature of these operations is the ability to monitor the progress and plan the corrective action in due time.

As regards extraordinary maintenance, it should be considered that always in the configuration phase, the machines currently on the market provide for a second list of operations, precisely of extraordinary maintenance, linked to unforeseeable events, which could occur during the normal life of the machine itself.

Extraordinary maintenance therefore describes a situation that requires human intervention to restore the correct operation of the machine itself.

The events or "triggers" capable of causing extraordinary maintenance could be:
- activation of a particular alarm in the machine;
- the value of a variable to a particular value (e.g., the temperature that rises above a certain threshold);
- more complex rules.

Finally, considering the scheduled maintenance, during the use of the machine by a user, the maintenance technician can realize that it is necessary to carry out periodic operations, aimed at maintaining the production standard of the machine itself.

Therefore, in general, "scheduled maintenance" operations are foreseen, defined directly by the user, which are added to the specific machine and managed as the previous maintenance operations.

In this case, the only possible trigger is time, so that periodic actions are foreseen, as mentioned, aimed at preserving the operating efficiency of the plant or machine in general.

Based on the above, it can be figured out how managing a large number of machining centers to be maintained can become very complex.

Therefore, in order to organize maintenance operations, it is necessary to classify them according to their level of priority.

The scheduled and ordinary maintenance will therefore pass, during their periodic life cycle, from a low to a high priority level, allowing the expiry of the activity.

Extraordinary maintenance appears immediately with maximum priority and consequently requires sudden intervention.

There is also to consider that many maintenances could be easily carried out directly by the end user, given their ease.

However, simply assigning instructions to the end user so that the latter can independently maintain a work center or a machine, which also includes very delicate dangerous parts, can be inconvenient.

Furthermore, it is necessary that in some way it may be possible testing the operation of the machine, verifying that the maintenance has taken place correctly, so as not to run the risk that the work center or the machine in general may be active again, when the maintenance was not carried out correctly, with the risk that the same could be damaged.

It is clear how commercially it is necessary and useful to have an optimal organization of maintenance systems, without however risking to ruin the system in any way.

In light of the above, it is therefore an object of the present invention to propose a method and a system aimed at allowing better programming and optimizating of the maintenance procedures of work centers, plants, machines and the like, in total safety.

Another object of the invention is to propose a method and a system for optimizing the maintenance of work centers, machines, systems and the like, which can be easily integrated into existing IT systems.

It is therefore specific object of the present invention a system for maintenance managing comprising a central remote control unit, at least one database, connected to said central remote control unit, in which files and multimedia contents, containing maintenance procedures, are stored, at least one machine comprising one manufacturing unit for manufacturing pieces of wood, plastic, aluminum and the like, to maintain, a diagnostic unit, having one or more sensors and/or detectors arranged on said manufacturing unit, to detect the operating status of said manufacturing unit based on one or more functional parameters, and a processing module operatively connected to said diagnostic unit, configured to detect and process the data related to said parameters detected by said sensors and/or detectors, wherein said processing module comprises transceiving means, for the connection to said central remote control unit for the transmission of said data relevant to said parameters detected by said sensors and/or detectors, and one or more computer, that can be associated to said machine, equipped with display means, such as a display, wherein said central control unit is configured to carry out, following the detection of a maintenance request of said manufacturing unit, the following steps: based on a preinstalled list, determining if said maintenance intervention is part of a self-maintenance category; transmitting an alert signal to one or more computers combined with said at least one machine; receiving a command from said one or more computers and selecting at least one multimedia content or file from said database, which describes the required steps to carry out the required maintenance for said manufacturing unit and transmits it to said at least one computer, such that said at least one computer can reproduce it for a user so that he can carry out the maintenance operations described in it; and receiving from said processing module the status of said manufacturing unit following the maintenance carried out by means of said sensors and/or detectors of said diagnostic unit; and enabling the restart of the operating activity of said manufacturing unit if maintenance has been correctly carried out and if said sensors and/or detectors of said diagnostic unit detect a correct operating status of said manufacturing unit.

Always according to the invention, said system may comprise a maintenance service center, operatively connected to said central remote control unit, and said central control unit may be configured to transmit a signal to said maintenance service center to activate a maintenance, if said sensors and/or detectors of said diagnostic unit provide an indication that said manufacturing unit has not been restored.

Still according to the invention, said central remote control unit may be configured to transmit an alert signal to said one or more computer and to require a maintenance intervention transmitting a further signal to said maintenance service center, if, on the basis of said preinstalled list, it determines that the necessary maintenance intervention for reactivating said manufacturing unit is not part of a self-maintenance category.

Further according to the invention, said central remote control unit may be configured to detect said maintenance request.

Advantageously according to the invention, said processing module may be configured to detect said maintenance request.

Preferably according to the invention, said maintenance request may be based on said data relevant to said parameters detected by said sensors and/or detectors of said diagnostic unit.

Always according to the invention, said central remote control unit may be a server in cloud.

Still according to the invention, said database may be in a server in cloud.

Advantageously according to the invention, said multimedia files contained in said database may comprise video, audio, text files and the like.

Further according to the invention, said computers may comprise tablets and/or smartphones and/or laptops and/or personal computers and/or smartwatches and/or viewers and/or wearable devices.

Preferably according to the invention, said parameters detected by said sensors and/or detectors of said diagnostic unit comprise temperature and/or pressure and/or vibration and/or distance and fluid levels, and said parameters detected by said detectors comprise time and/or working hours of said machine and/or the number of maintenance operations.

Always according to the invention, said central remote control unit may manage a chatbot to guide a user during the self-maintenance steps.

It is further object of the present invention a control method to control a maintenance management system as defined above, characterized in that it comprises the following steps: A. detecting a maintenance request of said manufacturing unit by said sensors and/or detectors of said diagnostic unit; B. determining by said central remote control unit if the maintenance activity aimed at restoring said malfunction of said manufacturing unit is part of self-maintenance category with respect to said preinstalled list; C. if said maintenance activity is part of said self-maintenance category, selecting at least one multimedia content from said database wherein required steps to restore the operation of said manufacturing unit are described; D. transmitting said multimedia content to at least one of said computers, so that a user can carry out the maintenance; and E. receiving data of said parameters detected by said sensors and/or detectors of said diagnostic unit following user maintenance after reception on one of said computers of said multimedia content, to verify the restored operation of said manufacturing unit.

Always according to the invention, said step E may comprise the transmission step of said data relevant to said parameters detected by said sensors and/or detectors of said diagnostic unit from said processing module to said central remote control unit.

Still according to the invention, said method may further comprise the following step: F. said central remote control unit transmits a signal to said maintenance service center to activate a maintenance, if said sensors and/or detectors of said diagnostic unit provide an indication that said manufacturing unit has not been restored.

Advantageously according to the invention, said method may transmit a signal to said maintenance service center to activate a maintenance, if in said step C maintenance activity is not part of said self-maintenance category.

It is also form of the present invention a computer program comprising instructions that, when the program is executed by a computer, cause the execution, by the computer, of the steps A-E of the method as defined above.

It is still object of the present invention a computer readable storage medium comprising instructions that, when executed by a computer, cause the execution, by the computer, of the method steps as defined above.

The present invention will be now described, for illustrative but not limitative purposes, according to its preferred embodiments, with particular reference to the figures of the enclosed drawings, wherein:
figure 1 shows the scheme of a maintenance management system according to the present invention;
figure 2 shows an operating flow chart of the maintenance management system according to the present invention;
figure 3 shows the screen of a terminal for requesting a maintenance;
figure 4 shows a first screen for the geo-location of a plant to be maintained;
figure 5 shows a second screen, in which all the plants to which maintenance must be carried out are shown; and
figure 6 shows operating graphs (analytics) of a plant.

In the various figures, similar parts will be indicated by the same reference numbers.

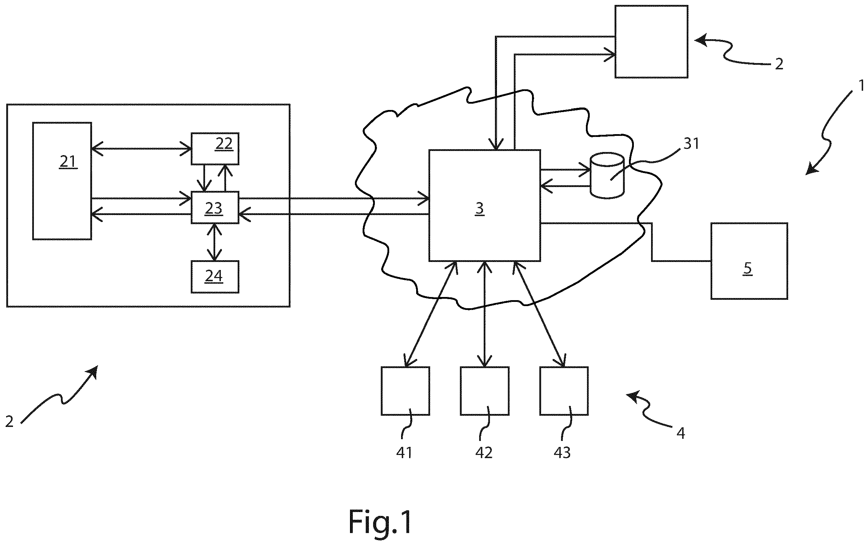

Referring to figure 1, a block diagram of the maintenance control system 1 according to the present invention can be seen.

The maintenance control system 1, as it can be seen, comprises at least one plant or machine 2 to be maintained, connected to a remote control central unit 3, to which a plurality of terminals 4 can be connected, each associated with a user, in which each terminal of said plurality of terminals 4 is connected to said remote control central unit 3, and a maintenance service center 5.

The machine 2 comprises an operating part or manufacturing unit 21 (hereinafter referred to as manufacturing unit it will meant a work center, an operating system, a device, or in general all that is suitable for carrying out workings and requires autonomous maintenance), which is the one to carry out the operations for which said machine 2 is designed and includes the elements, the mechanical parts and for which it is necessary to carry out the maintenance and possibly replace parts to allow maintenance of the operating performance.

Said machine 2 also comprises a diagnostic unit 22, suitable for detecting, by means of suitable sensors and/or detectors (not shown in the figure), the operating status of the machining unit 21, so as to determine the possible need for maintenance interventions.

In particular, said diagnostic unit 22 can provide, as sensors and/or detectors, counters for determining the machine hours, in which the machine 2 has been active, temperature, pressure and the like detectors, specifically to determine the operating status of the machining unit 21.

The machine 2 also comprises a processing module 23, connected to said diagnostic unit 22, and in general to said machining unit 21.

Said processing module 23 processes the detections of the diagnostic unit 22 obtained by means of said sensors and/or detectors, to determine the need for any maintenance interventions.

The processing module 23 also comprises transceiver means, which function will be better described below, and processing means, suitably programmed, for carrying out the maintenance method according to the present invention.

Finally, the machine 2 comprises memory means 24, connected to said processing module 23, and aimed at storing any information and data necessary for the correct operation of said processing module 23.

The remote control central unit 3 in the present embodiment is made in the cloud. Naturally, said remote control central unit 3 can optionally consist of a specific server or the like.

The control central unit 3 can be connected to said processing module 23 by means of said transceiver means. Of course, a plurality of machines 2 can be connected to the control central unit 3, through the respective processing module 23.

Said remote control central unit 3 is connected to a database 31, in which files and multimedia contents, such as video, audio, and the like, in which maintenance procedures can be shown and read, are stored and can be accessed by said remote control central unit 3. Said files and multimedia contents can be stored and read if necessary by said remote control central unit 3, as better explained below.

In the embodiment shown, said database 31 is also in the cloud. Of course, also in this case, the same can be provided in a server, which can be the same server of said remote control central unit 3, or a further remote server.

The plurality of terminals 4 comprises one or more terminals indicated with the numerical references 41, 42, 43,..., which can be tablets, smartphones, personal computers, smartwatches, viewers, wearable devices, and/or any other device capable of accessing via an Internet network to the cloud and therefore to the remote control central unit 3, to which each of said terminals 4 can be connected.

Each of said terminals 41, 42, 43, each associated with a respective user, is programmed by means of a suitable program, such as an app and the like, to allow easy access to said remote control central unit 3. Each terminal will naturally be programmed to allow access and control of one or more specific machines 2.

The maintenance service center 5 is connected to said remote control central unit 3 and accessible by whoever actually provides the maintenance service. Said maintenance service center 5 can consist of one or more (networked) terminals and servers.

The operation of the maintenance control system 1 described above is as follows.

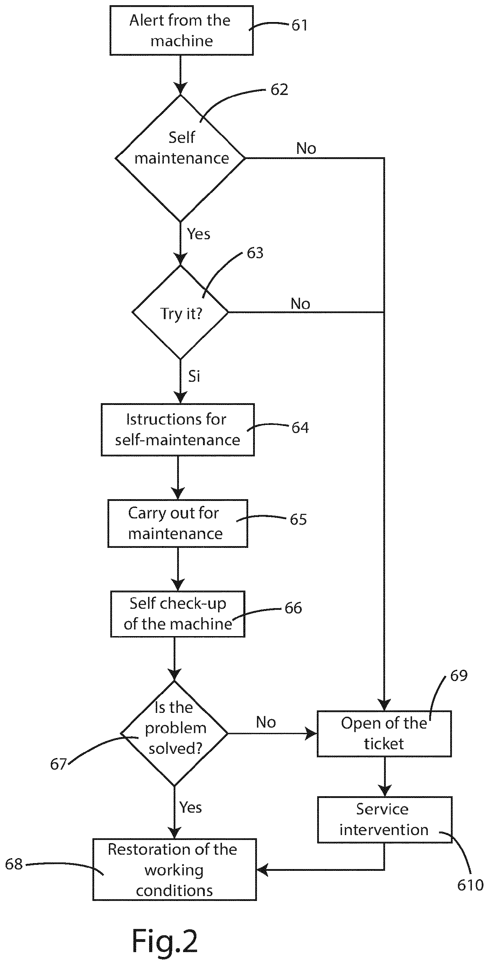

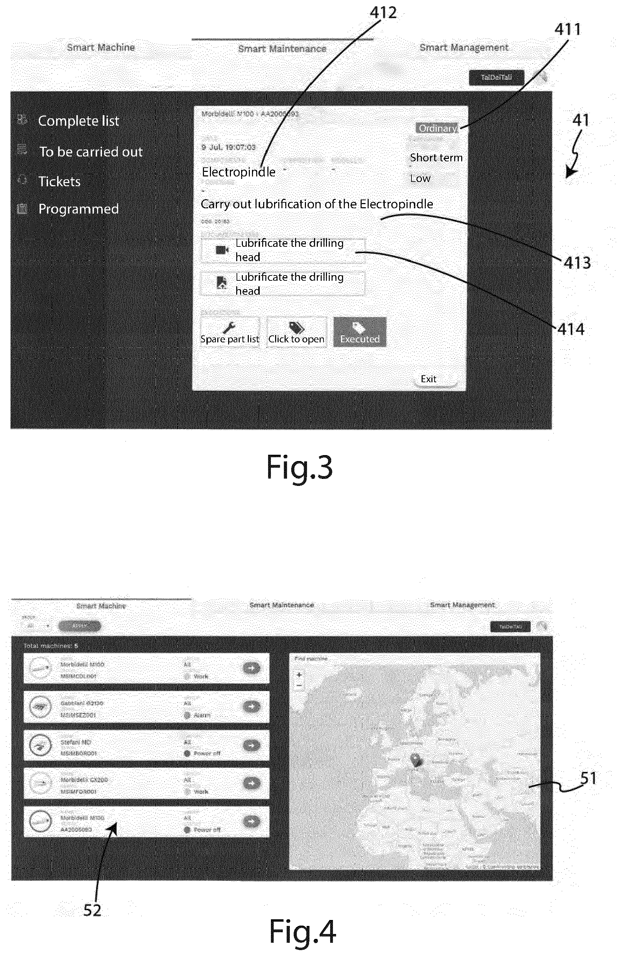

In the following, reference will be made to the block diagram 6 of figure 2 and to figures 3, 4, 5, and 6.

As anticipated above, through the diagnostic unit 22, the processing module 23 can detect the possible need for ordinary, scheduled or extraordinary maintenance, producing a signal, or an alert, as indicated in step 61.

Therefore, the processing module 23 communicates by means of transmission means to the remote control central unit 3 that there is a need for maintenance.

The user via his own terminal, for example terminal 41, connects with the remote control central unit 3. The terminal 41 is provided with display means, such as a display and the like, not shown in the figures, by means of which as indicated in step 62, it can detect the type of maintenance required and the option to carry out the self-maintenance, which can be ordinary, scheduled or extraordinary.

The central remote control unit, according to the type of intervention required, can offer the user the possibility of self-maintenance, as mentioned in said step 62. In this case, by means of the program installed in terminal 41, which can also be a simple downloadable app, if the user decides to self-maintain the processing unit (see step 63), can allow, by means of suitable digital buttons, the loading of self-maintenance instructions in step 64.

In particular, referring to figure 3, a possible image is observed that the user provided with the terminal 41 can see in this case. As can be seen, there are several buttons and digital panels shown on the screen.

In particular, box 411 shows the type of maintenance, which in this case is ordinary, while box 412 shows the object that needs maintenance, which in the present case is an electrospindle. Furthermore, in box 413 the necessary maintenance is described, which in this case is the lubrication of the electrospindle. Also on the screen of terminal 41, there is the button 414, which activates the obtaining, or downloading, of the multimedia material needed to carry out maintenance. In this way, the user can start the maintenance of the machining unit 21.

Therefore, the user can, again through his own terminal 41, download for example a video through which he is step-by-step guided to the maintenance of the machining unit 21.

When the user activates the aforementioned button 414, the remote control central unit 3 independently retrieves from the database 31 the multimedia files necessary for the self-maintenance, such as a video and/or a user manual, which allow the user, always using the terminal 41, to access the machining unit 21 and carry out the maintenance.

After the maintenance of the machining unit 21 (step 65), if all the self-maintenance steps and instructions are completed, the interface module, through the diagnostic unit 22, detects the possible operating status of the machine, always by means of sensors and/or detectors installed in said machining unit 21. In other words, the diagnostic unit 22 substantially detects whether the machining unit 21 has been correctly repaired or maintained and then restored to carry out the necessary machining, as indicated in step 66. Then, the diagnostic unit 22 performs a check-up of the machining unit 21.

In other words, there is a diagnostic feedback from the diagnostic unit 22, which transmits the data detected following the maintenance (or self-maintenance) intervention to said remote control central unit 3 by means of the transceiver means of said processing module 23.

The processing module 23, at this point, detects in step 67 whether the problem has been solved or not.

In case of the test is positive, for which the maintenance by the user has been successful, in step 68 normal working conditions are restored. Therefore, the interface module communicates by means of the transceiver means, with which the remote control central unit 3 is equipped with, so that the machining unit 21 is restored to its functions.

Otherwise, if the test is negative, the processing module 23 transmits to the remote control central unit 3, again by means of its own transceiver means, that the maintenance has not been completed, and therefore, said remote control central unit 3 opens a "ticket", that is transmitting to the maintenance service center 5 the request for a service intervention, as indicated in step 69. Subsequently, obviously and in a traditional way, there is the intervention of the maintenance service center in step 610 to restore of ordinary operating conditions.

In particular, the operators of the maintenance service center 5, referring to figures 4, 5, and 6, will be able, through suitable applications, to geo-locate the request for intervention and determine the machine, or machining unit 21 model to which an ordinary or extraordinary maintenance has to be carried out. In fact, as can be seen in figure 4, a map 51 can be seen, which shows a pointer that locates the origin of the maintenance request (the aforementioned "ticket"), and indicators 52, which show the models of machines object of the intervention request, for which there is an active request.

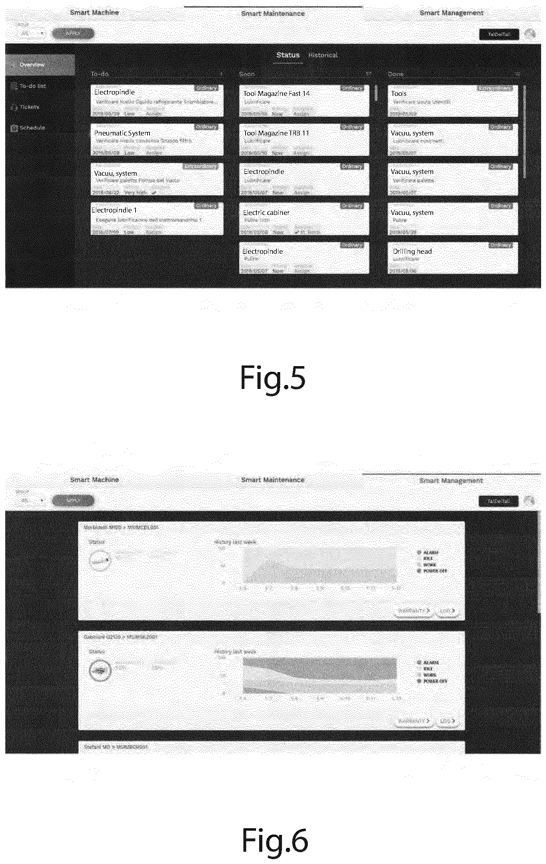

Subsequently (see figure 5), the maintenance service center 5 allows to easily check all the active activities of ordinary or extraordinary maintenance, by means of a sort of to-do list, to better organize the maintenance intervention activities.

Finally, the maintenance service center 5, which is connected to the remote control central unit 3, will always have up-to-date information on the operation of the various machines, having a sort of "history" of the maintenance activities in order to be able to better program them in the future.

Naturally, the steps 64-68 are performed only in case of the maintenance required in the aforementioned step 62, whether of an ordinary, scheduled or extraordinary type, can actually be carried out by a user.

This determination is carried out, in the present embodiment, by said remote control central unit 3, on the basis of a pre-installed, or programmed table or list, in which a group of maintenance operations falling within a category of self-maintenance are collected.

In case of the maintenance intervention does not fall within the aforementioned self-maintenance category, for example for reasons of risk or for the need for any pieces to be installed in the machining unit 21, for which special technical expertise is required, the processing module 23 automatically communicates the type of intervention to be performed to the remote control central unit 3. Therefore, said remote control central unit 3 automatically transmits the maintenance request to the maintenance service center 5.

In any case, as shown in the flowchart of figure 6, as indicated in step 69, the request for a service intervention can also be reached in case of, although the maintenance can be carried out by the user, this latter decides not to proceed independently. In this case, from said step 63, it would go directly to said ticket opening step 69, i.e. of maintenance requesting.

As can be seen, the maintenance management system 1 allows an optimization of the organization of maintenance for the user, however allowing the assignment to a maintenance service center 5, one of the active maintenance operations at that particular moment.

Of course, the remote control central unit 3 will be able to manage the priority level of the maintenance operations of the different machines 2 connected to the cloud, i.e. the remote control central unit 3.

Among the available functions of the maintenance management system 1, there is that of being able to transmit, via the remote control central unit 3, push notifications to a particular user, for example and in particular to the respective terminal 41... 43, informing the user associated with each of said terminals 41, 42, 43 about a particular event that has occurred to the machining unit 21 of interest. Possible events that can cause a push notification to be issued can be the following:
- machine in downtime;
- appearance of a particular alarm;
- ordinary maintenance with maximum priority;
- scheduled maintenance with maximum priority;
- extraordinary maintenance;
- assignment of a maintenance operation.

The notifications caused by the events described above are now sent to the users of that particular organization or customer based on:
- role;
- user ID;
- user preferences.

In fact, it is possible to subscribe the receipt of particular notifications, thus being able to customize the service, so as to receive only what is deemed interesting for the individual user.

Furthermore, when a user intends to make significant changes to the configuration of one or more machining unit 21 (for example all the units of a specific model), the maintenance management system 1 can, by means of the remote control central unit 3, send configuration update commands to the processing modules 23 of the various machines 2.

For example, this can allow configuring new maintenance operations dynamically.

As mentioned, each maintenance operation is accompanied by multimedia files contained, stored, and possibly periodically updated in the database 31, which can be documents, videos, photos suitable for understanding the activity necessary to carry out that particular maintenance on the machining unit 21.

In addition, it is considered that spare parts may sometimes be required to carry out maintenance. Therefore, the user, by means of his own terminal 41... 43, can also have a list of recommended spare parts.

In this way, again by means of the app installed on the respective terminal 41... 43, the user can purchase spare parts that the remote control central unit 3 will both charge him and coordinate the physical transmission operations of the same.

In addition, if the multimedia documentation for carrying out the self-maintenance downloaded from the remote control central unit 3 is not exhaustive for understanding a particular situation in the machining unit 21 described within the operation maintenance, there is the possibility, as already mentioned above, to request by the user and automously, or independently, automatic procedure performed by the remote control central unit 3 described above, the opening of a ticket or maintenance request to the maintenance service center 5.

This maintenance request will be created automatically, accompanied by context information, for a more immediate understanding of the problem.

Of course, the user can check the status of the maintenance request through his own terminal 41, 42, 43 at any time.

Thanks to the above system, the remote control central unit 3 will be able to collect a set of information taken from the maintenance activities of the different users on their machines 2. In this way, predictive maintenance systems, and algorithms for ordinary/extraordinary maintenance activities configured in the catalog can be presented.

All maintenance status updates can be stored in an "event log" in the cloud.

This event log will be used to extrapolate some Key Performance Indicators useful to the user and to the maintenance service. Among these, the following may be listed:
- average lead time for the resolution of maintenance operations (for single maintenance or for group of maintenance of similar complexity);
- average advance/delay in resolving operations with respect to the proposed schedule by the remote control central unit 3;
- decomposition of the maintenance life cycle (percentage (%) of time spent waiting for spare parts, percentage (%) of actual repair time, etc.).

In addition to the above, the maintenance control system 1 may also provide for the possibility of integrating a chatbot to help the user to obtain a series of data regarding the cause of intervention.

The chatbot will use the data from the machining unit 21 and detected by the diagnostic unit 22 to understand the actual existence of a problem that the user is able or not to solve and propose some corrective solutions.

An advantage of the present invention is that of allowing even non-expert users to carry out maintenance operations on work centers in an easy and safe way, obtaining significant savings both in economic terms and in intervention time terms.

A further advantage of the present invention is that of allowing possible market operators to acquire useful information to determine any problems of plants, so as to be able to carry out any structural or functional corrections to limit or optimize maintenance interventions on other similar plants.

The present invention has been described for illustrative but not limitative purposes, according to its preferred embodiments, but it is to be understood that modifications and/or changes can be introduced by those skilled in the art without departing from the relevant scope as defined in the enclosed claims.

## Claims

1. System for maintenance managing (1) comprising
a central remote control unit (3),
at least one database (31), connected to said central remote control unit (3), in which files and multimedia contents, containing maintenance procedures, are stored,
at least one machine (2) comprising
one manufacturing unit (21) for manufacturing pieces of wood, plastic, aluminum and the like, to maintain,
a diagnostic unit (22), having one or more sensors and/or detectors arranged on said manufacturing unit (21), to detect the operating status of said manufacturing unit (21) based on one or more functional parameters, and
a processing module (23) operatively connected to said diagnostic unit (22), configured to detect and process the data related to said parameters detected by said sensors and/or detectors, wherein said processing module (23) comprises transceiving means, for the connection to said central remote control unit (3) for the transmission of said data relevant to said parameters detected by said sensors and/or detectors, and
one or more computer (41, 42, 43), that can be associated to said machine (2), equipped with display means, such as a display,
wherein said central control unit (3) is configured to carry out, following the detection of a maintenance request of said manufacturing unit (21), the following steps:
- based on a preinstalled list, determining if said maintenance intervention is part of a self-maintenance category;
- transmitting an alert signal to one or more computers (41, 42, 43) combined with said at least one machine (2);
- receiving a command from said one or more computers (41, 42, 43) and selecting at least one multimedia content or file from said database (31), which describes the required steps to carry out the required maintenance for said manufacturing unit (21) and transmits it to said at least one computer (41, 42, 43), such that said at least one computer (41, 42, 43) can reproduce it for a user so that he can carry out the maintenance operations described in it; and
- receiving from said processing module (23) the status of said manufacturing unit (21) following the maintenance carried out by means of said sensors and/or detectors of said diagnostic unit (22); and
- enabling the restart of the operating activity of said manufacturing unit (21) if maintenance has been correctly carried out and if said sensors and/or detectors of said diagnostic unit (22) detect a correct operating status of said manufacturing unit (21).

2. System (1) according to the preceding claim, **characterized**
**in that** it comprises a maintenance service center (5), operatively connected to said central remote control unit (3), and
**in that** said central control unit (3) is configured to transmit a signal to said maintenance service center (5) to activate a maintenance, if said sensors and/or detectors of said diagnostic unit (22) provide an indication that said manufacturing unit (21) has not been restored.

3. System (1) according to the preceding claim, **characterized in that** said central remote control unit (3) is configured to transmit an alert signal to said one or more computer (41, 42, 43) and to require a maintenance intervention transmitting a further signal to said maintenance service center (5), if, on the basis of said preinstalled list, it determines that the necessary maintenance intervention for reactivating said manufacturing unit (21) is not part of a self-maintenance category.

4. System (1) according to any one of the preceding claims, **characterized in that** said central remote control unit (3) is configured to detect said maintenance request.

5. System (1) according to any one of the preceding claims, **characterized in that** said processing module is configured to detect said maintenance request.

6. System (1) according to any one of the preceding claims, **characterized in that** said maintenance request is based on said data relevant to said parameters detected by said sensors and/or detectors of said diagnostic unit (22).

7. System (1) according to any one of the preceding claims, **characterized in that** said central remote control unit (3) is a server in cloud.

8. System (1) according to any one of the preceding claims, **characterized in that** said database (31) is in a server in cloud.

9. System (1) according to any one of the preceding claims, **characterized in that** said multimedia files contained in said database (31) comprise video, audio, text files and the like.

10. System (1) according to any one of the preceding claims, **characterized in that** said computers (41, 42, 43) comprise tablets and/or smartphones and/or laptops and/or personal computers and/or smartwatches and/or viewers and/or wearable devices.

11. System (1) according to any one of the preceding claims, **characterized in that** said parameters detected by said sensors and/or detectors of said diagnostic unit (22) comprise temperature and/or pressure and/or vibration and/or distance and fluid levels, and said parameters detected by said detectors comprise time and/or working hours of said machine (2) and/or the number of maintenance operations.

12. System (1) according to any one of the preceding claims, **characterized in that** said central remote control unit (3) manages a chatbot to guide a user during the self-maintenance steps.

13. Control method (6) to control a maintenance management system (1) according to any one of the preceding claims, **characterized in that** it comprises the following steps:
A. detecting a maintenance request of said manufacturing unit (21) by said sensors and/or detectors of said diagnostic unit (22);
B. determining by said central remote control unit (3) if the maintenance activity aimed at restoring said malfunction of said manufacturing unit (21) is part of self-maintenance category with respect to said preinstalled list;
C. if said maintenance activity is part of said self-maintenance category, selecting at least one multimedia content from said database (31) wherein required steps to restore the operation of said manufacturing unit are described (21);
D. transmitting said multimedia content to at least one of said computers (41, 42, 43), so that a user can carry out the maintenance; and
E. receiving data of said parameters detected by said sensors and/or detectors of said diagnostic unit (22) following user maintenance after reception on one of said computers (41, 42, 43) of said multimedia content, to verify the restored operation of said manufacturing unit (21).

14. Method (6) according to the preceding claim, **characterized in that** said step E comprises the transmission step of said data relevant to said parameters detected by said sensors and/or detectors of said diagnostic unit (22) from said processing module (23) to said central remote control unit (3).

15. Method (6) according to any one of claims 13-14, **characterized in that** it further comprises the following step:
F. said central remote control unit (3) transmits a signal to said maintenance service center (5) to activate a maintenance, if said sensors and/or detectors of said diagnostic unit (22) provide an indication that said manufacturing unit (21) has not been restored.

16. Method (6) according to any one of claims 13 - 15, **characterized in that** it transmits a signal to said maintenance service center (5) to activate a maintenance, if in said step C maintenance activity is not part of said self-maintenance category.

17. Computer program comprising instructions that, when the program is executed by a computer, cause the execution, by the computer, of the steps A-E of the method according to any of the claims 13-16.

18. Computer readable storage medium comprising instructions that, when executed by a computer, cause the execution, by the computer, of the method steps according to any of the claims 13-16.
